# EUROPÄISCHE PATENTSCHRIFT

(11) **EP 2 527 221 B1**
(45) Veröffentlichungstag und Bekanntmachung des Hinweises auf die Patenterteilung: **29.04.2015**
(21) Anmeldenummer: 12003441.8
(22) Anmeldetag: 04.05.2012
(51) Int. Cl.: B60W 30/16

(54) **Verfahren zum Betrieb eines längsführenden Fahrerassistenzsystems eines Kraftfahrzeugs und Kraftfahrzeug**
Method for operating a longitudinally guiding driver assistance system of a motor vehicle and motor vehicle
Procédé d'opération d'un système d'assistance au conducteur de guidage longitudinal d'un véhicule automobile et véhicule automobile

(30) Priorität: 25.05.2011 DE 102011102429
(43) Veröffentlichungstag der Anmeldung: 28.11.2012
(73) Patentinhaber: Audi AG, 85045 Ingolstadt (DE)
(72) Erfinder: Schuberth, Stefan, 85057 Ingolstadt (DE)
(74) Vertreter: Thielmann, Frank

(56) Entgegenhaltungen:
- DE-A1- 10 354 290
- DE-A1-102005 007 802
- DE-A1-102005 044 013
- DE-A1-102006 054 220

## Beschreibung

Die Erfindung betrifft ein Verfahren zum Betrieb eines längsführenden Fahrerassistenzsystems nach dem Oberbegriff des Anspruchs 1.

Daneben betrifft die Erfindung ein Kraftfahrzeug mit einem solchen Fahrerassistenzsystem.

Längsführende Fahrerassistenzsysteme sind im Stand der Technik weithin bekannt. Sie regeln die Geschwindigkeit des Kraftfahrzeugs beispielsweise auf eine bestimmte Geschwindigkeit oder auf ein voranfahrendes Fahrzeug als Regelobjekt. Während die einfachste Ausführungsform eines längsführenden Fahrerassistenzsystems einfach auf eine vom Fahrer wählbare Wunschgeschwindigkeit hin regelt, beispielsweise als Geschwindigkeitsregelanlage (GRA) oder Tempomat bekannte Fahrerassistenzsysteme, sind auch eine Vielzahl von längsführenden Fahrerassistenzsystemen bekannt, bei denen der Abstand zu einem bestimmten voranfahrenden Fahrzeug, das im Folgenden als Regelobjekt bezeichnet wird, durch entsprechende Beschleunigungs- oder Bremsmaßnahmen im Wesentlichen konstant gehalten wird. Auch ein Wunschabstand kann von einem Fahrer wählbar ausgestaltet werden. Dabei wird der Abstand in modernen Fahrerassistenzsystemen, die auf Regelobjekte regeln können, häufig in Form einer Zeitlücke beschrieben. Fahrerassistenzsysteme, die auf eine Wunschgeschwindigkeit regeln, solange kein Regelobjekt gegeben ist, und bei Vorhandensein eines Regelobjekts in einem Folgebetrieb arbeiten, werden meist als sogenannte ACC-Systeme (Adaptive Cruise Control) bezeichnet. Jedoch sind auch andere längsführende Fahrerassistenzsysteme bekannt, die auf ein Regelobjekt hin die Geschwindigkeit eines Kraftfahrzeugs anpassen können, beispielsweise sogenannte PreCrash-Systeme, die eine Kollision vermeiden sollen oder zumindest die Folgen einer Kollision abmindern sollen.

DE 10 2005 007802 A1 offenbart ein Verfahren mit den Merkmalen des Oberbegriffs des Anspruchs 1.

Mittels einer geeigneten Umfeldsensorik, häufig wenigstens eines langreichweitigen Radarsensors, werden Objekte im Vorfeld des eigenen Kraftfahrzeugs detektiert und häufig vorauswählend dahingehend klassifiziert, ob sie als Zielobjekte in Frage kommen, aus denen dann das Regelobjekt ausgewählt wird, häufig aufgrund bestimmter Kriterien, wobei üblicherweise das unmittelbar dem eigenen Kraftfahrzeug voranfahrende Fahrzeug als Regelobjekt ausgewählt werden wird.

Zur Auswahl des Regelobjekts ist es bekannt, einen sogenannten Fahrschlauch zu definieren, in dem in Frage kommende Zielobjekte liegen müssen. Der Fahrschlauch ist die wahrscheinlichste Trajektorie, die das eigene Kraftfahrzeug im weiteren Verlauf zurücklegen wird. In diese gehen grundsätzlich Egodaten über den Betriebszustand des eigenen Kraftfahrzeugs ein, insbesondere die Geschwindigkeit und die Gierrate, jedoch werden häufig auch weitere Daten, insbesondere Daten eines Navigationssystems und/oder vorausschauender Sensoren, berücksichtigt. So ist es bekannt, das Verhalten voranfahrender Fahrzeuge zu betrachten. Tritt bei allen diesen voranfahrenden Kraftfahrzeugen ein lateraler Versatz an einer bestimmten Stelle auf, so kann beispielsweise schlussgefolgert werden, dass dort eine Kurve folgt. Auch der Leitplankenverlauf oder der Verlauf sonstiger fester Objekte am Fahrbahnrand kann nachverfolgt werden. Wichtige Informationen kann auch ein Navigationssystem, in dessen Kartendaten Straßenverläufe abgespeichert sind, liefern; schließlich werden auch häufig Kameras eingesetzt, welche die aktuelle Fahrspur begrenzende Linien in ihrem weiteren Verlauf nachverfolgen können. Ein detektiertes Objekt kommt nur dann als Regelobjekt in Frage, wenn es innerhalb dieses Fahrschlauchs liegt.

Dabei können jedoch sowohl Sensormessfehler als auch Fehlberechnungen des Fahrschlauchs zu einer fehlerhaften Objektauswahl führen. So kann es beispielsweise vorkommen, dass der Fahrschlauch bei Kurvenein- und -ausgängen fehlerhaft ist, so dass ein voranfahrendes Fahrzeug, obwohl es detektiert wurde, nicht als Regelobjekt ausgewählt werden kann, da es nicht innerhalb des Fahrschlauchs liegt. Sensormessfehler treten beispielsweise dann auf, wenn sogenannte Spiegelungen bzw. Reflektionen auftreten. Ein Beispiel hierfür ist eine stark reflektierende Leitplanke, deren Reflektion ein voranfahrendes Fahrzeug seitlich neben der aktuellen Fahrspur und damit außerhalb des Fahrschlauchs abbilden kann. Auf diese Weise können in bestimmten Situationen eine falsche Auswahl oder gar keine Auswahl des Regelobjekts erfolgen, so dass ein äußerst schlechtes Annäherungsverhalten des längsführenden Fahrerassistenzsystems resultiert.

Der Erfindung liegt daher die Aufgabe zugrunde, den Betrieb eines längsführenden Fahrerassistenzsystems, das einen Folgeregler aufweist, auf mehrspurigen Straßen zur Reduzierung von Fehlern bei der Regelobjektbestimmung zu verbessern.

Zur Lösung dieser Aufgabe ist bei einem Verfahren der eingangs genannten Art erfindungsgemäß vorgesehen, dass bei einer ermittelten Abzweigung der Straße im Bereich der Zielobjekte die Fahrsituationsinformation nicht berücksichtigt wird.

Das erfindungsgemäße Verfahren sieht also vor, eine Fahrsituationsanalyse dahingehend vorzunehmen, dass Fahrsituationsinformationen genutzt werden können, die die Plausibilisierung von Regelobjekten beeinflussen und die sich auf die relativ durch das Kraftfahrzeug befahrene Spur beziehen. Solche Fahrsituationsinformationen können die Plausibilität im Hinblick auf Fehler der Sensorik beeinflussen, beispielsweise im Hinblick auf Reflektionen, insbesondere Radarreflektionen, außerhalb einer Fahrspur detektierter Zielobjekte, die, wenn dort keine Fahrspur vorliegt, sich mit hoher Wahrscheinlichkeit aber dennoch auf einer gültigen Fahrspur befinden (vergleiche auch die sogenannten "Leitplankenspiegelungen"); es ist aber auch möglich, das tatsächliche Fahrverhalten von Fahrern oder Verkehrsregeln zu beachten, beispielsweise, dass dann, wenn ein Überholverbot auf einer rechten oder einer linken Seite gegeben ist, auch eine Orientierung an Zielobjekten als Regelobjekt denkbar ist, die sich auf der entsprechenden Seite lateral zum eigenen Kraftfahrzeug versetzt befinden und nicht überholt werden können. Die Erfindung setzt also Zusatzwissen bezüglich durch die Fahrsituationsinformationen konkret beschriebener Fahrsituationen ein, wobei Fahrsituationen mit einer konkret befahrenen Fahrspur relativ zu den übrigen Fahrspuren einer Straße speziellen Schlussfolgerungen zugeordnet sind. Es wird also eine übergeordnete Interpretation im Hinblick auf die fahrspurbezogene Fahrsituation vorgenommen und bei der Auswahl des Regelobjekts berücksichtigt. Aus der Fahrsituation werden weitere Schlüsse aufgrund des Zusatzwissens gezogen, welche Schlüsse die Auswahl beeinflussen können.

Resultat dieser insbesondere zusätzlich vorgesehenen Berücksichtigung der Fahrsituationsinformation und des mit dieser verknüpften, in Form der Beeinflussung der Auswahl realisierten Zusatzwissens ist, dass die Kundenzufriedenheit erhöht wird, nachdem durch das Zusatzwissen, das letztlich bestimmte Annahmen wiedergibt, eine verbesserte Auffindung von Regelobjekten ermöglicht wird. Es ist eine stärker vorausschauende, mehr an der Fahrererfahrung orientierte Auswahl des Regelobjekts gegeben, die auch zu weniger Nebenspurstörungen führt, die bei ACC-Systemen sehr unerwünscht sind. Ferner wird die Anzahl der schlecht geregelten Annäherungen reduziert.

Dabei ist es zum einen besonders zweckmäßig, wenn bei einer ermittelten Abzweigung der Straße im Bereich der Zielobjekte die Fahrsituationsinformation nicht berücksichtigt wird, nachdem sich das Zusatzwissen, dass durch die Fahrsituationsinformation abgebildet wird, ja gerade auf Fahrsituationen bezieht, in denen keine solchen weiteren Bereiche, in denen (legal) Zielobjekte vorhanden sein können, gegeben sind. Das Zusatzwissen beruht also auf der Grundlage, dass keine Abfahrt/Zufahrt nach/von rechts oder links und keine Kreuzung in der Entfernung der betrachteten Objekte vorhanden ist.

Allgemein sollen im Rahmen dieser Beschreibung zwei Möglichkeiten dargestellt werden, wie die Fahrsituationsinformation verwendet werden kann. Beide Möglichkeiten können auch gemeinsam eingesetzt werden.

So kann zum einen vorgesehen sein, dass die Fahrsituationsinformation als ein insbesondere die Plausibilität wenigstens eines Zielobjekts als Regelobjekt veränderndes Auswahlkriterium verwendet wird. In diesem Fall bildet also die Betrachtung, auf welcher Spur einer mehrspurigen Straße konkret sich das eigene Kraftfahrzeug befindet mit gegebenenfalls weiteren Daten über die potentiellen Regelobjekte selbst ein Kriterium, das die Plausibilität eines Zielobjekts, die letztlich beschreibt, mit welcher Sicherheit das Zielobjekt das Regelobjekt ist, verändert bzw. beeinflusst. Grundsätzlich ist es dabei möglich, ein - gegebenenfalls zusätzlich zu betrachtendes - Regelobjekt allein durch Betrachtung der Fahrsituationsinformation und von Messdaten über die Zielobjekte selbst zu bestimmen, also ohne dass weitere komplexe Kriterien wie beispielsweise ein Fahrschlauch berücksichtigt werden. Es ist jedoch bevorzugt, die Fahrsituationsinformation lediglich als eines von mehreren Kriterien einzusetzen, um hier eine verbesserte Plausibilisierung zu erzielen. Dabei sei an dieser Stelle angemerkt, dass im Rahmen einer solchen Plausibilisierung häufig jedem Zielobjekt ein Plausibilierungswert zugeordnet wird, der anhand der verwendeten Kriterien verändert wird, wobei letztlich das plausibelste Zielobjekt als Regelobjekt verwendet werden wird.

In einer bevorzugten Ausführungsform der vorliegenden Erfindung ist jedoch vorgesehen, dass Parameter wenigstens eines Auswahlkriteriums in Abhängigkeit der Fahrsituationsinformation angepasst werden. Das bedeutet, wenigstens ein ohnehin vorhandenes Auswahlkriterium wird in Abhängigkeit der Fahrsituationsinformation derart umparametriert, dass das Zusatzwissen, das mit der Fahrsituationsinformation verknüpft ist, letztlich indirekt in die Auswahl des Regelobjekts einfließt. Dies ist insbesondere dann sinnvoll, wenn die eigene Spurzuordnung nur mit einer eher geringen Verlässlichkeit angegeben werden kann oder man dieser Fahrspurinformation aus anderen Gründen weniger traut.

Dabei kann mit besonderem Vorteil vorgesehen sein, dass bei einem einen Fahrschlauch zur Vorauswahl von Zielobjekten als mögliche Regelobjekte verwendenden Auswahlkriterium der Verlauf des Fahrschlauchs, insbesondere die Begrenzungen des Fahrschlauchs, in Abhängigkeit der Fahrsituationsinformation angepasst wird. Auf diese Weise ist es möglich, detektierte Objekte, die normalerweise nicht in dem Fahrschlauch enthalten wären und mithin der Betrachtung entzogen worden wären, wieder als Zielobjekte dem Plausibilisierungsprozess zuzufügen, so dass beispielsweise dann, wenn eine Orientierung an einem lateral versetzten Objekt sinnvoll wäre oder ein Messfehler vorliegt, bei dem ein Objekt aus dem Fahrschlauch "herausrutscht", dennoch dieses Objekt weiter als Regelobjekt in Frage kommt.

Konkrete Beispiele zur Anpassung des Fahrschlauchs werden im Folgenden noch näher dargestellt.

Ferner kann vorgesehen sein, dass in Abhängigkeit der Fahrsituationsinformation eine Zeitdauer bis zur Auswahl eines Zielobjekts als Regelobjekt verändert wird, insbesondere wenigstens ein im Rahmen der Plausibilierung genutzter Schwellwert und/oder eine Zahl zu durchlaufender Zyklen oder eine Zeit, in der das Zielobjekt als vorhanden detektiert sein muss, um als Regelobjekt verwendet zu werden, angepasst wird. Im Prinzip lässt sich also sagen, dass in Abhängigkeit der Fahrsituationsinformation die Geschwindigkeit, mit der die Plausibilisierung letztlich stattfindet (Plausibilisierungsgeschwindigkeit), verändert werden kann. So kann beispielsweise in bestimmten Situationen sinnvoll sein, dass ein Zielobjekt bereits im sogenannten "ersten Zyklus", also in der zyklischen Berechnung, in der es das erste Mal detektiert wurde, bereits als Regelobjekt ausgewählt werden kann und dergleichen.

In einer konkreten Ausführungsform der vorliegenden Erfindung kann vorgesehen sein, dass bei Rechtsverkehr und beim Fahren auf einer ganz rechten Fahrspur oder bei Linksverkehr und beim Fahren auf einer ganz linken Fahrspur bei der Auswahl des Regelobjekts auch lateral gegenüber dem Kraftfahrzeug versetzte Zielobjekte als mögliche Regelobjekte betrachtet und/oder in ihrer Plausibilität als Regelobjekte erhöht werden. Befindet man sich also auf der Fahrspur, die ganz rechts auf der Straße liegt, herrscht Rechtsverkehr und befindet man sich ferner in einem Gebiet, in dem nicht rechts überholt werden darf, muss ein voranfahrendes Fahrzeug, auf das als Regelobjekt geregelt werden soll, nicht zwangsläufig in derselben Fahrspur fahren, sondern kann beispielsweise in einer links benachbarten Fahrspur vorliegen. Da es jedoch nicht überholt werden darf, ist es sinnvoll, ein derartiges Fahrzeug dennoch als Regelobjekt in Betracht zu ziehen. Mit anderen Worten bedeutet dies, dass in einem solchen Fall alle vor dem Kraftfahrzeug detektierten Objekte als Zielobjekte berücksichtigt werden können. Soll auf der Grundlage der Fahrsituationsinformationen entschieden werden, so kann beispielsweise einfach das in Fahrtrichtung dem eigenen Kraftfahrzeug nächste Zielobjekt als Regelobjekt ausgewählt werden. Insbesondere dann, wenn die eigene Spurzuordnung nur mit einer geringeren Verlässlichkeit angegeben werden kann oder der Fahrspurinformation aus anderen Gründen nicht hinreichend getraut wird, ist es auch möglich, Parameter anderer Auswahlkriterien anzupassen. So kann vorgesehen sein, dass ein Zielobjekt in einem berechneten Fahrschlauch schon im ersten Zyklus relevant werden kann, also als Regelobjekt ausgewählt werden kann, und/oder der Fahrschlauch kann auf beiden Seiten aufgeweitet werden, das bedeutet, verbreitert werden. Eine Aufweitung auch zu der Seite hin, auf der sich keine weiteren Fahrspuren befinden, kann insbesondere im Hinblick auf die bereits erwähnten Messfehler, welche beispielsweise durch Spiegelungen an einer Leitplanke oder dergleichen auftreten können, sinnvoll sein.

Allgemein gesagt kann, beispielsweise bezüglich solcher Leitplankenspiegelungen, vorgesehen sein, dass bei einem Befahren einer äußeren Fahrspur bei der Auswahl des Regelobjekts nach außen gegenüber dem Kraftfahrzeug lateral versetzte Zielobjekte als mögliche Regelobjekte betrachtet werden und/oder in ihrer Plausibilität als Regelobjekt erhöht werden. Auch in einem solchen Fall kann beispielsweise vorgesehen sein, dass der Fahrschlauch, in diesem Fall nach außen, aufgeweitet wird, so dass bei einer Reflektion ein Regelobjekt letztlich nicht aus dem Fahrschlauch "herausdriften" kann, obwohl lediglich ein Messfehler vorliegt.

Ferner kann in konkreter Ausgestaltung der Erfindung vorgesehen sein, dass bei einer dreispurigen Straße und einem Fahren auf der mittleren Fahrspur, wenn zwei parallel und/oder auf parallelen Trajektorien voranfahrende weitere Fahrzeuge detektiert werden, wenigstens das linke Fahrzeug bei Rechtsverkehr oder das rechte Fahrzeug bei Linksverkehr als Zielobjekt als mögliches Regelobjekt betrachtet wird und/oder in seiner Plausibilität als Regelobjekt erhöht wird. Befindet man sich also auf einer dreispurigen Straße auf der mittleren Fahrspur und man detektiert im Vorfeld des Kraftfahrzeugs zwei Objekte, die parallel fahren bzw. auf parallelen Fahrtrajektorien befindlich sind, so kann man davon ausgehen, dass zumindest das linke Objekt relevant ist, wobei zumindest in dem Fall, in dem die Fahrsituationsinformation die Grundlage für die Auswahl des Regelobjekts bildet, das linke Zielobjekt (bzw. bei Linksverkehr das rechte Zielobjekt) das Regelobjekt bildet. Findet jedoch eine Anpassung von anderen Auswahlkriterien statt, so kann auch in diesem Fall die Plausibilisierungsgeschwindigkeit beispielsweise dadurch beschleunigt werden, dass ein Objekt im Fahrschlauch schon im ersten Zyklus als Regelobjekt ausgewählt werden kann. Auch hier kann vorgesehen werden, den Fahrschlauch nach links aufzuweiten. Dem liegt wiederum die Annahme zugrunde, dass selbst dann, wenn die mittlere Fahrspur frei wäre, ein Überholen eines linken Objekts bei Rechtsverkehrs bzw. eines rechten Objekts bei Linksverkehr nicht erlaubt wäre und mithin auch dieses Objekt als mögliches Regelobjekt betrachtet werden sollte. Folgt man diesem Gedankengang weiter, so kann auch dann, wenn beim Fahren auf der mittleren Fahrspur bei einer dreispurigen Straße nur ein einziges voranfahrendes Objekt gemessen wird, also unabhängig von einem zweiten Objekt parallel zu diesem, der Fahrschlauch nach links aufgeweitet werden, falls man rechts nicht überholen darf, bzw. nach rechts aufgeweitet werden, falls man links nicht überholen darf. Die Plausibilisierungsgeschwindigkeit sollte in diesem zuletzt dargestellten Fall eher nicht von der normalen, mittleren Plausibilisierungsgeschwindigkeit abweichen, nachdem allenfalls eine mittlere Wahrscheinlichkeit dafür besteht, dass das einzelne voranfahrende Objekt sich ebenfalls auf der mittleren Fahrspur befindet.

In einer weiteren konkreten Ausgestaltung der Erfindung kann vorgesehen sein, dass bei einer mehrspurigen Straße und einem Fahren auf der ganz linken Spur bei Rechtsverkehr oder der ganz rechten Spur bei Linksverkehr, wenn eine der Anzahl der Fahrspuren entsprechende Anzahl parallel und/oder auf parallelen Trajektorien voranfahrender weiterer Fahrzeuge detektiert werden, wenigstens das ganz linke Fahrzeug bei Rechtsverkehr oder das ganz rechte Fahrzeug bei Linksverkehr als Zielobjekt als mögliches Regelobjekt betrachtet wird und/oder in seiner Plausibilität als Regelobjekt erhöht wird. Befindet man sich im Beispiel des Rechtsverkehrs auf der linken Spur und man detektiert so viele Objekte wie Fahrspuren, die parallel fahren bzw. auf parallelen Fahrtrajektorien befindlich sind, so kann man auch davon ausgehen, dass zumindest das ganz linke Objekt relevant sein muss, das sich normalerweise auf derselben Fahrspur wie man selber befinden müsste. Insbesondere kann das am weitesten linke, vorausfahrende Objekt dann auch als Regelobjekt gewählt werden, insbesondere, wenn die Auswahl auf der Grundlage der Fahrsituationsinformation selbst getroffen wird. Auf diese Weise ist es übrigens auch problemlos möglich, Regelobjekte, die aufgrund von Leitplankenspiegelungen oder dergleichen nach links herauswandern, weiter als Regelobjekt zu halten, insbesondere auch über die Leitplanke hinaus. Wird durch Umparametrierung Einfluss auf andere Auswahlkriterien genommen, kann beispielsweise die Plausibilisierungsgeschwindigkeit so parametriert werden, dass ein Zielobjekt im Fahrschlauch schon im ersten Zyklus als Regelobjekt gewählt werden kann. Zusätzlich oder alternativ ist es denkbar, den Fahrschlauch bei Rechtsverkehr nach links und bei Linksverkehr nach rechts aufzuweiten. Wie bereits beschrieben, kann diese Aufweitung des Fahrschlauchs nach links ohnehin grundsätzlich in einer solchen Fahrsituation vorgenommen werden. Werden bei einer dreispurigen Straße nur zwei parallel vorausfahrende Objekte detektiert, ist allenfalls von einer mittleren Wahrscheinlichkeit dafür auszugehen, dass sich eines der Objekte auf der eigenen, linken Fahrspur befindet, so dass hier die Plausibilisierungsgeschwindigkeit für die Objektauswahl bei ihren normalen, grundsätzlich gegebenen Parametern belassen werden kann. Eine weitere Ausgestaltung der vorliegenden Erfindung sieht vor, dass dann, wenn bei einer dreispurigen Straße und bei einem Fahren auf der linken Fahrspur nur ein voranfahrendes Objekt detektiert wird, dem kein weiteres Objekt parallel fährt bzw. wobei kein weiteres Objekt auf einer parallelen Trajektorie befindlich ist, die Plausibilisierungsgeschwindigkeit für dieses Objekt erniedrigt werden kann, da die Wahrscheinlichkeit, dass sich dieses Objekt auch auf der linken Fahrspur befindet, eher als gering anzusehen ist. Dieses Konzept lässt sich auch auf Straßen mit mehr als drei Spuren übertragen, auf denen nur sehr wenige parallel fahrende Objekte detektiert sind.

Selbstverständlich sind die hier dargestellten konkreten Ausgestaltungen nur beispielhaft zu versehen, nachdem auch andere Fälle denkbar sind, in denen eine die befahrene Fahrspur relativ zu den gesamt vorhandenen Fahrspuren betreffende Fahrsituationsinformation auch in weiteren Fällen nützlich im Hinblick auf die Plausibilisierung eines Regelobjekts mit Hintergrundwissen verbunden werden kann.

In weiterer Ausgestaltung der vorliegenden Erfindung kann vorgesehen sein, dass als weitere Fahrspurinformation ein die Wahrscheinlichkeit des Zutreffens der Bestimmung der aktuellen befahrenen Fahrspur beschreibender Verlässlichkeitswert bestimmt und bei der Auswahl des Regelobjekts und/oder dem Betrieb des Fahrerassistenzsystems berücksichtigt wird. Ist beispielsweise ein besonders niedriger Verlässlichkeitswert gegeben, also eine niedrige Wahrscheinlichkeit, dass die Fahrspurinformation zutreffend ist, so können Änderungen an der Plausibilisierung oder der Parametrierung anderer Auswahlkriterien gänzlich wegfallen oder beispielsweise nur eingeschränkt, beispielsweise prozentual, durchgeführt werden. So kann die durch die Fahrsituationsinformation vorgenommene Plausibilisierung bzw. Beeinflussung der Plausibilisierung letztlich selbst plausibilisiert werden.

In diesem Zusammenhang kann dann, wenn die Fahrsituationsinformation selbst die Grundlage bzw. Basis für die Auswahl eines Regelobjekts bildet, vorgesehen sein, dass, insbesondere wenn der Verlässlichkeitswert kleiner als ein Schwellwert ist, auf ein aufgrund der Fahrsituationsinformation bestimmtes Regelobjekt schwächer geregelt wird, insbesondere nur eine Motorbremse verwendet wird und/oder eine Beschleunigungsanforderung des Fahrerassistenzsystems begrenzt wird. Falls die eigene Spurzuordnung nur mit einer geringen Verlässlichkeit angegeben wird oder man dieser Information nicht zu stark traut, kann die Reaktion auf ein - gegebenenfalls zusätzliches - Regelobjekt, das hauptsächlich aufgrund der Fahrsituationsinformation plausibilisiert ist von einer "normalen" Regelung weg zu einer Art "vorweggenommene Reaktion" hin geändert werden, indem lediglich die Beschleunigung etwas verringert wird bzw. ins Schleppmoment gegangen wird. Es ergibt sich dann letztlich eine Art vorgezogene Reglerreaktion, bis das Regelobjekt hinreichend plausibilisiert ist, beispielsweise ein Schwellwert für einen Plausibilitätswert überschritten wird.

In weiterer Ausgestaltung der vorliegenden Erfindung kann vorgesehen sein, dass die Fahrspurinformation unter Berücksichtigung der Daten wenigstens eines Umfeldsensors, insbesondere eines Radarsensors und/oder einer Kamera, und/oder eines Navigationssystems ermittelt werden. Insbesondere werden Sensoren bzw. Systeme, die ohnehin im Kraftfahrzeug vorhanden sind, eingesetzt, um die Fahrspurinformation und somit die Fahrsituationsinformation zu ermitteln.

Zur konkreten Ausgestaltung der Ermittlung der Fahrspurinformationen kann vorgesehen sein, dass der laterale Abstand wenigstens eines nicht bewegten Objekts und/oder eine Fahrspurzahlinformation aus Kartendaten und/oder ein Attribut einer die aktuelle Fahrspur begrenzenden Linie und/oder eine Spurwechselinformation und/oder eine Überholinformation berücksichtigt werden. Selbstverständlich können auch weitere Informationen berücksichtigt werden, beispielsweise eine weitergehende Auswertung eines Kamerabilds oder dergleichen. Insgesamt wird also aufgrund mehrerer Informationen die eigene Fahrspur, die Gesamtzahl der Fahrspuren und gegebenenfalls eine Wahrscheinlichkeit dieser Aussagen in Form des Verlässlichkeitswerts ermittelt. Die Ermittlung kann aufgrund des lateralen Abstands stehender Objekte (Radarsensor), aufgrund der Information, wie viele Spuren vorhanden sind (Navigationssystem), aufgrund des Linienattributs durchgezogen/gestrichelt (Kamera), aufgrund einer Spurwechselinformation (Kamera), aufgrund überholter bzw. überholender Fahrzeuge links und rechts (Radarsensor) und weiterer Informationen ermittelt werden.

Neben dem Verfahren betrifft die vorliegende Erfindung auch ein Kraftfahrzeug, umfassend ein längsführendes Fahrerassistenzsystem, insbesondere ein ACC-System, mit einer zur Durchführung des erfindungsgemäßen Verfahrens ausgebildeten Steuereinrichtung. Sämtliche Ausführungen bzw. des erfindungsgemäßen Verfahrens lassen sich analog auf das erfindungsgemäße Kraftfahrzeug übertragen, mit welchem mithin auch die bereits beschriebenen Vorteile erhalten werden können.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: ein erfindungsgemäßes Kraftfahrzeug in einer Prinzipskizze,
- Fig. 2: eine erste Fahrsituation,
- Fig. 3: eine zweite Fahrsituation, und
- Fig. 4: eine dritte Fahrsituation.

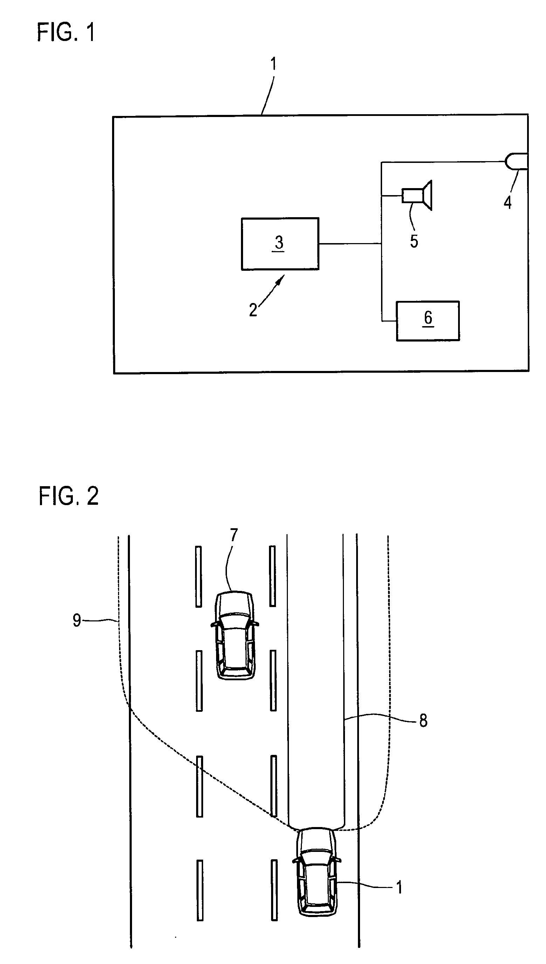

Fig. 1 zeigt eine Prinzipskizze eines erfindungsgemäßen Kraftfahrzeugs 1. Es umfasst als längsführendes Fahrerassistenzsystem 2 ein ACC-System, dem eine Steuereinrichtung 3 zugeordnet ist, die zur Durchführung des erfindungsgemäßen Verfahrens ausgebildet ist. Um seine Aufgabe erfüllen zu können, empfängt das Fahrerassistenzsystem 2 Daten von mehreren weiteren Fahrzeugsystemen, wobei hier beispielhaft ein Radarsensor 4, eine Kamera 5 und ein Navigationssystem 6 dargestellt sind. In einem Folgebetrieb ist das Fahrerassistenzsystem 2, wie grundsätzlich bekannt, dazu ausgebildet, die Geschwindigkeit des Kraftfahrzeugs 1 durch Ansteuerung des Motors und des Bremssystems mit einer Beschleunigungsanforderung derart zu regeln, dass der Abstand zu dem Regelobjekt gleich bleibt. Die vorliegende Erfindung befasst sich mit der Verbesserung der Plausibilisierung des Regelobjekts, was im Folgenden näher erläutert werden soll.

Zunächst sei jedoch festgehalten, dass im vorliegenden Ausführungsbeispiel das Kraftfahrzeug 1 in der Umgebung detektierte Objekte danach beurteilt, ob sie innerhalb eines Fahrschlauchs, also einer wahrscheinlichsten zukünftigen Trajektorie des Kraftfahrzeugs, liegen. Dort bilden die innerhalb dieses Fahrschlauchs liegenden detektierten Objekte Zielobjekte, aus denen das (wenigstens eine) tatsächliche Regelobjekt ausgewählt wird. Häufig wird als Regelobjekt das Zielobjekt ausgewählt, das entlang der zukünftigen Trajektorie den geringsten Abstand zu dem Kraftfahrzeug 1 aufweist, wobei jedoch auch andere Auswahlverfahren, wie sie im Stand der Technik bekannt sind, verwendet werden können. Die Bestimmung des Fahrschlauchs erfolgt dabei bereits aus Daten der weiteren Fahrzeugsysteme, insbesondere aus EgoDaten bezüglich des aktuellen Betriebszustands des Kraftfahrzeugs 1 und aus Umgebungsdaten.

Im Rahmen der vorliegenden Erfindung bestimmt die Steuereinrichtung 3 nun jedoch auch als Fahrspurinformationen die Gesamtzahl der Fahrspuren der aktuell befahrenen Straße sowie die aktuell durch das Kraftfahrzeug 1 befahrene Fahrspur und einen Verlässlichkeitswert, der die Plausibilität dieser Aussage angibt. Dabei werden insbesondere Daten des Radarsensors 4, der Kamera 5 und des Navigationssystems 6 im Rahmen einer Informationsfusion betrachtet, wobei u. a. berücksichtigt wird, wie hoch der laterale Abstand feststehender Objekte, beispielsweise einer Leitplanke, ist, wie viele Spuren laut Navigationssystem vorhanden sind, ob dicke/durchgezogene/gestrichelte Linien die aktuelle Fahrspur begrenzen, ob ein Spurwechsel durchgeführt wird, ob Fahrzeuge links und/oder rechts überholt werden oder überholen und dergleichen.

Zudem wird aber auch, insbesondere aus Daten des Navigationssystems 6 und der Kamera 5, ermittelt, ob im Bereich der betrachteten detektierten Objekte, insbesondere der Zielobjekte, eine Abfahrt, eine Auffahrt oder eine Kreuzung vorliegt, allgemein gesagt, ob weitere Straßen oder Spuren in die aktuell befahrene Straße münden. Liegt etwas Derartiges vor, wird die aus den Fahrspurinformationen abgeleitete Fahrsituationsinformation bei der Auswahl des Regelobjekts nicht berücksichtigt.

Die Fahrsituationsinformation gibt letztlich an, welche Fahrspur im Vergleich zu den restlichen Fahrspuren der Straße konkret befahren wird, beschreibt also eine gewisse Fahrsituation, für die ein Hintergrundwissen bzw. Zusatzwissen vorliegt, das eingesetzt werden kann, um eine verbesserte Plausibilisierung des Regelobjekts zu ermöglichen, wie im Folgenden an einigen Beispielen genauer dargelegt werden soll. Dabei wird vorliegend eine Ausführungsform der vorliegenden Erfindung beschrieben, bei der Parameter anderer Auswahlkriterien, insbesondere der Fahrschlauchbetrachtung, geändert parametriert werden. Selbstverständlich ist es auch denkbar, die Fahrsituationsinformation als eigenes Auswahlkriterium zu verwenden oder als grundsätzliches Auswahlkriterium, wie bereits im allgemeinen Teil der Beschreibung dargestellt wurde.

Fig. 2 zeigt nun eine erste Fahrsituation, in der sich das Kraftfahrzeug 1 auf der rechten Spur einer dreispurigen Straße befindet. Dabei wird vorliegend grundsätzlich von einem Rechtsverkehr ausgegangen, in dem auf der befahrenen Straße nicht rechts überholt werden darf. Ersichtlich befindet sich kein weiteres Kraftfahrzeug auf der rechten Spur der Straße, jedoch ist ein voranfahrendes Kraftfahrzeug 7, welches auch als Objekt detektiert wird, auf der mittleren Fahrspur der Straße zu erkennen. Würde nun ohne weitere Berücksichtigung der Fahrsituation der Fahrschlauch ermittelt, hätte er beispielsweise die mit einer durchgezogenen Linie 8 dargestellte Form. Das bedeutet, das Kraftfahrzeug 7 wäre nicht in dem Fahrschlauch enthalten und würde mithin auch nicht als Regelobjekt in Betracht gezogen werden. Hier setzt nun das erfindungsgemäße Verfahren an, indem bei einer Fahrsituationsinformation, die anzeigt, dass die rechte Spur einer dreispurigen Straße bei Rechtsverkehr und Überholverbot auf der rechten Seite befahren wird, der Fahrschlauch gemäß der gestrichelten Linie 9 nach links alle Spuren überspannend erweitert wird. Gleichzeitig findet auch eine Erweiterung des Fahrschlauchs nach rechts statt, um beispielsweise Reflektionen an feststehenden Objekten, die Objekte an falschen Orten erscheinen lassen könnten, ebenso berücksichtigen zu können, denn es ist ja bekannt, dass weiter rechts keine Fahrspur mehr vorliegt, auf der ein Objekt zu finden sein sollte. Letztlich ist die Schlussfolgerung bzw. das Zusatzwissen bezüglich der Fahrsituationsinformation hier, dass jedes detektierte Objekt, das dem Kraftfahrzeug 1 voranfährt, ein relevantes Regelobjekt darstellen kann. Im vorliegenden Fall wird es so problemlos ermöglicht, dass auch das Kraftfahrzeug 7 als Regelobjekt erkannt wird und auf dieses geregelt wird.

Nachdem ja vorliegend festgestellt wurde, dass letztlich jedes voranfahrende Objekt als Regelobjekt relevant werden könnte, kann vorliegend auch die Plausibilisierungsgeschwindigkeit erhöht werden, beispielsweise, indem festgelegt wird, dass ein Zielobjekt im Fahrschlauch schon im ersten Zyklus, in dem es detektiert wurde, relevant, also ein Regelobjekt werden kann.

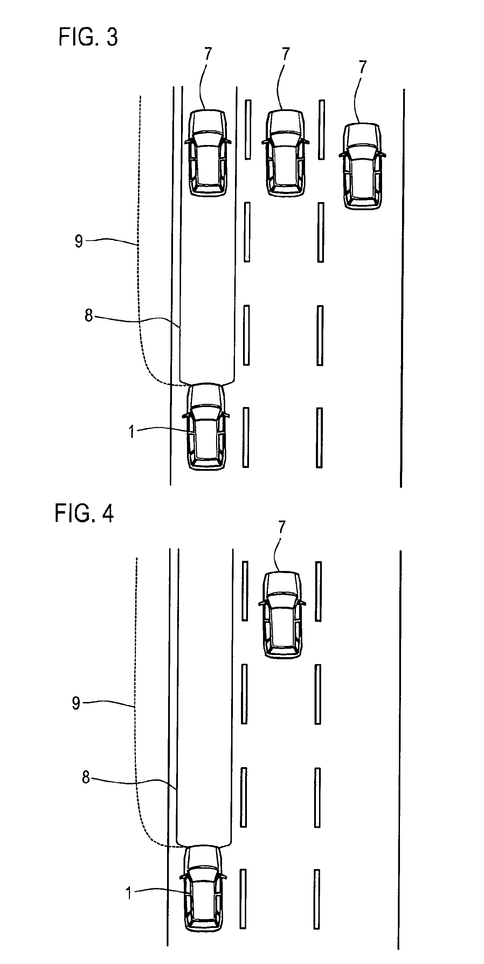

Fig. 3 zeigt ein weiteres Beispiel einer Fahrsituation, in der sich das Kraftfahrzeug 1 wiederum auf einer dreispurigen Straße befindet, dieses Mal jedoch auf der ganz linken Spur. Ersichtlich wird auch hier, nachdem es sich um eine Randspur handelt, der Fahrschlauch gemäß der gestrichelten Linie 9 nach links aufgeweitet, um beispielsweise ein Regelobjekt nicht durch Leitplankenspiegelungen oder dergleichen zu verlieren. Weiterhin ist aber zu erkennen, dass drei weitere, parallel zueinander bzw. auf parallelen Trajektorien fahrende Kraftfahrzeuge 7, die als Objekte erkannt werden, vorhanden sind. Nachdem es nun sehr wahrscheinlich ist, dass eines der detektierten voranfahrenden Objekte 7 sich ebenso auf der linken Spur befindet, kann auch hier vorgesehen sein, dass die Plausibilisierungsgeschwindigkeit erhöht wird, beispielsweise, indem wiederum ein Objekt im Fahrschlauch schon im ersten Zyklus relevant werden kann.

Schließlich zeigt Fig. 4 ein weiteres Beispiel einer Fahrsituation, bei dem sich das Kraftfahrzeug 1 wiederum auf der linken Spur einer dreispurigen Straße befindet, in diesem Fall jedoch nur ein voranfahrendes Kraftfahrzeug 7 zu erkennen ist, mithin kein paralleles voranfahrendes Objekt für das Kraftfahrzeug 7 gemessen wird. Nachdem nun die Wahrscheinlichkeit, dass sich dieses Objekt auch auf der linken Fahrspur befindet, sehr klein ist, kann in diesem Fall die Plausibilisierungsgeschwindigkeit erniedrigt werden, beispielsweise, indem zusätzliche Zyklen benötigt werden, damit ein Objekt als relevant im Fahrschlauch angesehen wird und dergleichen.

Selbstverständlich sind auch eine Vielzahl anderer Situationen denkbar, in denen Zusatzwissen zu einer bestimmten fahrspurbezogenen Fahrsituation genutzt werden kann, um die Plausibilisierung zu verbessern, beispielsweise die bereits vor Beginn dieser Figurenbeschreibung genannten Beispiele.

Es sei an dieser Stelle noch angemerkt, dass in einer speziellen Ausführungsform der vorliegenden Erfindung dann, wenn der Verlässlichkeitswert sehr niedrig ist oder grundsätzlich wenig Vertrauen in die Fahrspurinformationen gesetzt wird, eine "verminderte" Beeinflussung der Plausibilisierung des Regelobjekts durch die Fahrsituationsinformation angesetzt werden.

In einem Ausführungsbeispiel, in dem die Fahrsituationsinformation das hauptsächliche Auswahlkriterium für wenigstens ein Regelobjekt darstellt, kann auch die Beschleunigungsanforderung etwas reduziert werden, so dass nur eine Art Vorregelung bezüglich dieses Regelobjekts auftritt, bis sich die Plausibilisierung verbessert hat.

## Patentansprüche

1. Verfahren zum Betrieb eines längsführenden Fahrerassistenzsystems (2) eines Kraftfahrzeugs (1), insbesondere eines ACC-Systems, welches in einem Folgebetrieb die Geschwindigkeit des Kraftfahrzeugs (1) so regelt, das ein fahrerseitig gewählter oder vorgegebener Wunschabstand, insbesondere eine Wunschzeitlücke, zu einem Regelobjekt aufrecht erhalten wird, wobei das Regelobjekt aus einer Menge von aus Sensordaten ermittelten, insbesondere im Rahmen einer Vorauswahl aus insgesamt detektierten Objekten ausgewählten Zielobjekten ausgewählt wird,
wobei als Fahrspurinformationen eine Information über die aktuell befahrene Fahrspur und die Gesamtzahl der Fahrspuren der Straße ermittelt wird, wobei wenigstens eine die konkret befahrene Fahrspur im Vergleich zu den restlichen Fahrspuren der Straße beschreibende Fahrsituationsinformation bei der Auswahl des Regelobjekts berücksichtigt wird, **dadurch gekennzeichnet, dass** bei einer ermittelten Abzweigung der Straße im Bereich der Zielobjekte die Fahrsituationsinformation nicht berücksichtigt wird.

2. Verfahren nach Anspruch 1 , **dadurch gekennzeichnet, dass** die Fahrsituationsinformation als ein insbesondere die Plausibilität wenigstens eines Zielobjektes als Regelobjekt veränderndes Auswahlkriterium verwendet wird und/oder Parameter wenigstens eines Auswahlkriteriums in Abhängigkeit der Fahrsituationsinformation angepasst werden.

3. Verfahren nach Anspruch 2, **dadurch gekennzeichnet, dass** bei einem einen Fahrschlauch zur Vorauswahl von Zielobjekten als mögliche Regelobjekte verwendenden Auswahlkriterium der Verlauf des Fahrschlauchs, insbesondere die Begrenzungen des Fahrschlauchs, in Abhängigkeit der Fahrsituationsinformation angepasst wird.

4. Verfahren nach Anspruch 2 oder 3, **dadurch gekennzeichnet, dass** in Abhängigkeit der Fahrsituationsinformation eine Zeitdauer bis zur Auswahl eines Zielobjekts als Regelobjekt verändert wird, insbesondere wenigstens ein im Rahmen der Plausibilisierung genutzter Schwellwert und/oder eine Zahl zu durchlaufender Zyklen oder eine Zeit, in der das Zielobjekt als vorhanden detektiert sein muss, um als Regelobjekt verwendet zu werden, angepasst wird.

5. Verfahren nach einem der vorangehenden Ansprüche, **dadurch gekennzeichnet, dass** bei Rechtsverkehr und beim Fahren auf einer ganz rechten Fahrspur oder bei Linksverkehr und beim Fahren auf einer ganz linken Fahrspur bei der Auswahl des Regelobjekts auch lateral gegenüber dem Kraftfahrzeug versetzte Zielobjekte als mögliche Regelobjekte betrachtet werden und/oder in ihrer Plausibilität als Regelobjekt erhöht werden und/oder dass bei einem Befahren einer äußeren Fahrspur bei der Auswahl des Regelobjekts nach außen gegenüber dem Kraftfahrzeug lateral versetzte Zielobjekte als mögliche Regelobjekte betrachtet werden und/oder in ihrer Plausibilität als Regelobjekt erhöht werden.

6. Verfahren nach einem der vorangehenden Ansprüche, **dadurch gekennzeichnet, dass** bei einer dreispurigen Straße und einem Fahren auf der mittleren Fahrspur, wenn zwei parallel und/oder auf parallelen Trajektorien voranfahrende weitere Fahrzeuge detektiert werden, wenigstens das linke Fahrzeug bei Rechtsverkehr oder das rechte Fahrzeug bei Linksverkehr als Zielobjekt als mögliches Regelobjekt betrachtet wird und/oder in seiner Plausibilität als Regelobjekt erhöht wird.

7. Verfahren nach einem der vorangehenden Ansprüche, **dadurch gekennzeichnet, dass** bei einer mehrspurigen Straße und einem Fahren auf der ganz linken Spur bei Rechtsverkehr oder der ganz rechten Spur bei Linksverkehr, wenn eine der Anzahl der Fahrspuren entsprechende Anzahl parallel und/oder auf parallelen Trajektorien voranfahrender weiterer Fahrzeuge detektiert werden, wenigstens das ganz linke Fahrzeug bei Rechtsverkehr oder das ganz rechte Fahrzeug bei Linksverkehr als Zielobjekt als mögliches Regelobjekt betrachtet wird und/oder in seiner Plausibilität als Regelobjekt erhöht wird.

8. Verfahren nach einem der vorangehenden Ansprüche, **dadurch gekennzeichnet, dass** als weitere Fahrspurinformation ein die Wahrscheinlichkeit des Zutreffens der Bestimmung der aktuell befahrenen Fahrspur beschreibender Verlässlichkeitswert bestimmt und bei der Auswahl des Regelobjekts und/oder dem Betrieb des Fahrerassistenzsystems (2) berücksichtigt wird.

9. Verfahren nach Anspruch 8, **dadurch gekennzeichnet, dass**, insbesondere wenn der Verlässlichkeitswert kleiner als ein Schwellwert ist, auf ein aufgrund der Fahrsituationsinformation bestimmtes Regelobjekt schwächer geregelt wird, insbesondere nur eine Motorbremse verwendet wird und/oder eine Beschleunigungsanforderung des Fahrerassistenzsystems (2) begrenzt wird.

10. Verfahren nach einem der vorangehenden Ansprüche, **dadurch gekennzeichnet, dass** die Fahrspurinformationen unter Berücksichtigung der Daten wenigstens eines Umfeldsensors, insbesondere eines Radarsensors (4) und/oder einer Kamera (5), und/oder eines Navigationssystems (6) ermittelt werden.

11. Verfahren nach einem der vorangehenden Ansprüche, **dadurch gekennzeichnet, dass** zur Ermittlung der Fahrspurinformationen der laterale Abstand wenigstens eines nichtbewegten Objekts und/oder eine Fahrspurzahlinformation aus Kartendaten und/oder ein Attribut einer die aktuelle Fahrspur begrenzenden Linie und/oder eine Spurwechselinformation und/oder eine Überholinformation berücksichtigt werden.

12. Kraftfahrzeug (1), umfassend ein längsführendes Fahrerassistenzsystem (2), insbesondere ein ACC-System, mit einer zur Durchführung eines Verfahrens nach einem der vorangehenden Ansprüche ausgebildeten Steuereinrichtung (3).

## Claims

1. Method for operating a longitudinal guidance driver assistance system (2) of a motor vehicle, in particular an ACC (adaptive cruise control) system, which regulates the speed of the motor vehicle (1) in a master/slave operation in such a way that a desired distance which is selected or predefined by the driver, in particular a desired time gap, to a control object is maintained, the control object being selected from a number of selected target objects which are determined from sensor data, in particular in the context of a preselection from all of the detected objects, information about the current lane being driven in and the total number of the lanes of the road being determined as lane information, at least one item of driving situation information describing the lane actually being driven in by comparison with the rest of the lanes of the road being taken into consideration when selecting the control object, **characterised in that** when a junction in the road is detected in the region of the target objects, the driving situation information is not taken into consideration.

2. Method according to claim 1, **characterised in that** the driving situation information is used as a selection criterion which changes the plausibility of at least one target object being a control object, and/or parameters of at least one selection criterion are adapted according to the driving situation information.

3. Method according to claim 2, **characterised in that** in the case of a selection criterion using a traffic lane to preselect target objects as possible control objects, the course of the traffic lane, in particular the limits of the traffic lane, are adapted according to the driving situation information.

4. Method according to either claim 2 or claim 3, **characterised in that**, according to the driving situation information, a length of time until the selection of a target object as a control object is changed, in particular at least one threshold value which is used in the context of determining the plausibility and/or a number of cycles that are to elapse or a time in which the target object has to be detected as being present in order to be used as a control object, is adapted.

5. Method according to any of the preceding claims, **characterised in that** in the case of right-hand traffic and when driving in a lane which is furthest to the right, or in the case of left-hand traffic and when driving in a lane which is furthest to the left, when selecting the control object, target objects which are laterally offset from the motor vehicle are considered as possible control objects and/or the plausibility thereof as control objects is increased and/or **in that** when driving in an outer lane, when selecting the control object, outer target objects which are laterally offset from the motor vehicle are considered as possible control objects and/or the plausibility thereof as control objects is increased.

6. Method according to any of the preceding claims, **characterised in that** in the case of a road having three lanes, and when driving in the middle lane, when two additional vehicles driving in parallel and/or on parallel trajectories are detected, at least the left-hand vehicle in the case of right-hand traffic or the right-hand vehicle in the case of left-hand traffic, is considered, as a target object, as a possible control object and/or the plausibility thereof as a control object is increased.

7. Method according to any of the preceding claims, **characterised in that** in the case of a road having a plurality of lanes, and when driving in the lane which is furthest to the left in the case of right-hand traffic or in the lane which is furthest to the right in the case of left-hand traffic, when a number of additional vehicles driving in parallel and/or on parallel trajectories is detected which corresponds to the number of lanes, at least the vehicle which is furthest to the left in the case of right-hand traffic or the vehicle which is furthest to the right in the case of left-hand traffic is considered, as a target object, as a possible control object and/or the plausibility thereof as a control object is increased.

8. Method according to any of the preceding claims, **characterised in that** a reliability value describing the probability that the identification of the lane currently being driven in is correct is determined as additional lane information and taken into consideration when selecting the control object and/or operating the driver assistance system (2).

9. Method according to claim 8, **characterised in that**, in particular when the reliability value is below a threshold value, a control object which has been determined based on the driving situation information, is controlled to a lesser extent, in particular only an engine brake is used and/or an acceleration request of the driver assistance system (2) is restricted.

10. Method according to any of the preceding claims, **characterised in that** the lane information is determined taking into consideration the data from at least one environment sensor, in particular a radar sensor (4) and/or a camera (5), and/or a navigation system (6).

11. Method according to any of the preceding claims, **characterised in that** in order to determine the lane information, the lateral distance of at least one non-moving object and/or an item of lane information from map data and/or an attribute of a line delimiting the current lane and/or an item of lane change information and/or an item of overtaking information is taken into consideration.

12. Motor vehicle (1), comprising a longitudinal guidance driver assistance system (2), in particular an ACC system, comprising a control device (3) which is configured to carry out a method according to any of the preceding claims.

## Revendications

1. Procédé de fonctionnement d'un système d'assistance au chauffeur en guidage longitudinal (2) d'un véhicule automobile (1), en particulier d'un système ACC, qui, lors d'un fonctionnement en file, règle la vitesse du véhicule automobile (1) de manière à maintenir une distance souhaitée choisie côté chauffeur ou prédéfinie, en particulier un intervalle de temps souhaité, vis-à-vis d'un objet de réglage, dans lequel l'objet de réglage est choisi entre une certaine quantité d'objets ciblés déterminés à partir de données de capteur, en particulier dans le cadre d'une présélection entre des objets ciblés choisis parmi la totalité d'objets détectés,
dans lequel on détermine comme informations sur les voies de circulation une information sur la voie de circulation couramment parcourue et le nombre total des voies de circulation de la route, dans lequel au moins une information sur la situation du trafic décrivant la voie de circulation concrètement parcourue par rapport aux voies de circulation restantes de la route est prise en compte dans le choix de l'objet de réglage, **caractérisé en ce que**, lors d'un embranchement détecté de la route, on ne tient pas compte des informations sur la situation du trafic dans la zone des objets cibles.

2. Procédé selon la revendication 1, **caractérisé en ce que** l'information sur la situation du trafic est utilisée comme critère de choix modifiant en particulier la plausibilité au moins d'un objet cible comme objet de réglage et/ou les paramètres au moins d'un critère de choix sont adaptés en fonction de l'information sur la situation du trafic.

3. Procédé selon la revendication 2, **caractérisé en ce que**, dans le cas d'un critère de choix utilisant un boyau de circulation pour la présélection d'objets cibles comme objets de réglage possibles, on adapte le trajet du boyau de circulation, en particulier les limites du boyau de circulation, en fonction de l'information sur la situation du trafic.

4. Procédé selon la revendication 2 ou la revendication 3, **caractérisé en ce que**, en fonction de l'information sur la situation du trafic, on modifie l'intervalle de temps s'écoulant jusqu'au choix d'un objet cible comme objet de réglage, en particulier on adapte au moins une valeur de seuil utilisée dans le cadre de la plausibilité et/ou un nombre de cycles à effectuer ou encore un intervalle de temps dans lequel l'objet cible doit être détecté comme étant présent pour être utilisé comme objet de réglage.

5. Procédé selon l'une quelconque des revendications précédentes, **caractérisé en ce que**, en circulation à droite et lors d'un roulement sur une voie de circulation tout à fait à droite ou en circulation à gauche et lors d'un roulement sur une voie de circulation tout à fait à gauche, dans le choix de l'objet de réglage, on considère également comme objets de réglage possibles des objet cibles également décalés latéralement vis-à-vis du véhicule automobile et/ou on augmente leur plausibilité comme objet de réglage et/ou, lors d'un parcours d'une voie de circulation externe, dans le choix de l'objet de réglage, on considère comme objets de réglage possibles des objets cibles décalés latéralement vers l'extérieur vis-à-vis du véhicule automobile et/ou on augmente leur plausibilité comme objet de réglage.

6. Procédé selon l'une quelconque des revendications précédentes, **caractérisé en ce que**, dans le cas d'une route à trois voies et d'un roulement sur la voie de circulation centrale, si deux autres véhicules avançant parallèlement et/ou sur des trajectoires parallèles sont détectés, on considère au moins le véhicule de gauche en circulation à droite ou le véhicule de droite en circulation à gauche comme objet cible en tant qu'objet de réglage possible et/ou on augmente sa plausibilité comme objet de réglage.

7. Procédé selon l'une quelconque des revendications précédentes, **caractérisé en ce que**, dans le cas d'une route à plusieurs voies et d'une circulation sur la voie complètement à gauche en circulation à droite ou sur la voie complètement à droite en circulation à gauche, si un nombre - correspondant au nombre de voies de circulation - d'autres véhicules avançant parallèlement et/ou sur des trajectoires parallèles sont détectés, on considère au moins le véhicule complètement à gauche en circulation à droite ou le véhicule complètement à droite en circulation à gauche comme objet cible en tant qu'objet de réglage possible et/ou on augmente sa plausibilité en tant qu'objet de réglage.

8. Procédé selon l'une quelconque des revendications précédentes, **caractérisé en ce que** l'on détermine comme autre information sur les voies de circulation une valeur de fiabilité décrivant la vraisemblance de l'exactitude de la détermination de la voie de circulation couramment parcourue et on en tient compte dans le choix de l'objet de réglage et/ou dans le fonctionnement du système d'assistance au chauffeur (2).

9. Procédé selon la revendication 8, **caractérisé en ce que**, en particulier si la valeur de fiabilité est plus petite qu'une valeur de seuil, on la règle plus bas sur un objet de réglage déterminé en raison de l'information sur la situation du trafic, en particulier on utilise seulement un frein moteur et/ou on limite une exigence d'accélération du système d'assistance au chauffeur (2).

10. Procédé selon l'une quelconque des revendications précédentes, **caractérisé en ce que** les informations sur les voies de circulation sont déterminées en tenant compte des données au moins d'un capteur d'ambiance, en particulier d'un capteur radar (4) et/ou d'une caméra (5), et/ou d'un système de navigation (6).

11. Procédé selon l'une quelconque des revendications précédentes, **caractérisé en ce que**, pour déterminer les informations sur le nombre de voies de circulation, on tient compte de la distance latérale au moins d'un objet non déplacé et/ou d'une information sur le nombre de voies de circulation venant de données cartographiques et/ou d'un attribut d'une ligne délimitant la voie de circulation courante et/ou d'une information de changement de voie et/ou d'une information d'interdiction de dépasser.

12. Véhicule automobile (1), comprenant un système d'assistance au chauffeur en guidage longitudinal (2), en particulier un système ACC, avec un dispositif de commande (3) conçu pour effectuer un procédé selon l'une quelconque des revendications précédentes.
